# EUROPÄISCHE PATENTSCHRIFT

(11) **EP 3 138 148 B1**
(45) Veröffentlichungstag und Bekanntmachung des Hinweises auf die Patenterteilung: **18.04.2018**
(21) Anmeldenummer: 15756889.0
(22) Anmeldetag: 25.08.2015
(51) Int. Cl.: H01M 10/39, H01M 16/00, H01M 10/615, H01M 10/66, H01M 10/6561, H01M 10/627, F01K 3/02, F02G 5/02

(54) **KRAFT-WÄRME-KOPPLUNGSANLAGE ZUR DEZENTRALEN STROM- UND WÄRMEVERSORGUNG**
COMBINED HEAT AND POWER PLANT FOR THE DECENTRALIZED SUPPLY OF POWER AND OF HEAT
INSTALLATION DE PRODUCTION COMBINÉE DE CHALEUR ET D'ÉLECTRICITÉ POUR UNE ALIMENTATION DÉCENTRALISÉE EN COURANT ET EN CHALEUR

(30) Priorität: 28.08.2014 DE 102014217114
(43) Veröffentlichungstag der Anmeldung: 08.03.2017
(73) Patentinhaber: Siemens Aktiengesellschaft, 80333 München (DE)
(72) Erfinder: TREMEL, Alexander, 91096 Möhrendorf (DE); SCHÄFER, Jochen, 90408 Nürnberg (DE); VORTMEYER, Nicolas, 91054 Erlangen (DE); LENK, Uwe, 08064 Zwickau (DE)
(86) Internationale Anmeldenummer: PCT/EP2015/069401
(87) Internationale Veröffentlichungsnummer: WO 2016/030351

(56) Entgegenhaltungen:
- DE-A1- 19 547 520
- DE-A1-102012 010 270
- DE-A1-102012 203 665
- JP-A- 2001 229 961
- JP-A- 2004 055 373

## Beschreibung

Die Erfindung betrifft eine Kraft-Wärme-Kopplungsanlage zur dezentralen Strom- und Wärmeversorgung gemäß dem Oberbegriff von Patentanspruch 1.

Die Kraft-Wärme-Kopplung (KWK) ist allgemein bekannt und wird üblicherweise auch als Wärme-Kraft-Kopplung (WKK) bezeichnet. Unter der Kraft-Wärme-Kopplung ist die gleichzeitige Gewinnung von mechanischer Energie, die in der Regel in elektrischen Strom beziehungsweise elektrische Energie umgewandelt wird, und nutzbarer Wärme für Heizzwecke oder gegebenenfalls für Produktionszwecke zu verstehen.

Üblicherweise verfügen Wohneinheiten und Industrieunternehmen weitestgehend über eine Strom- und Wärmeversorgung durch eine zentrale Infrastruktur in Form eines Stromnetzes und eines Wärmenetzes. Verbreitet sind auch der Strombezug aus der zentralen Infrastruktur sowie eine dezentrale Wärmeversorgung, welche beispielsweise mittels eines Gaskessels und/oder Ölkessels erfolgt. Hierdurch wird eine gesicherte Strom- und Wärmeversorgung inklusive der Abdeckung von Spitzenlasten gewährleistet.

In Zeiten steigender Kosten der zentralen Energieversorgung kommt der dezentralen Erzeugung beziehungsweise Bereitstellung von Wärme und elektrischer Energie eine immer wichtigere Rolle zu. Zur Realisierung einer dezentralen Stromversorgung kommen beispielsweise Photovoltaik- und/oder Windanlagen zum Einsatz. Aufgrund eines relativ stabilen Gaspreises und eines hohen Brennstoffnutzungsgrads gewinnt jedoch auch die Kraft-Wärme-Kopplung im dezentralen Bereich stark an Bedeutung. Kraft-Wärme-Kopplungsanlagen weisen üblicherweise eine Kraftmaschine zum Bereitstellen von elektrischer Energie auf. Hierbei umfasst die Kraftmaschine wenigstens ein Kraftmaschinenelement, mittels welchem durch Verbrennen von Kraftstoff mechanische Energie bereitgestellt wird. Mit anderen Worten kann das Kraftmaschinenelement im Kraftstoff gespeicherte Energie in mechanische Energie umwandeln und diese mechanische Energie bereitstellen. Ferner umfasst die Kraftmaschine wenigstens einen mit dem Kraftmaschinenelement gekoppelten Generator, welchem die von dem Kraftmaschinenelement bereitgestellte mechanische Energie zugeführt wird. Mittels des Generators wird die bereitgestellte mechanische Energie in elektrische Energie umgewandelt, sodass die Kraftmaschine insgesamt elektrische Energie bereitstellen kann.

Alternativ kann im Falle einer Brennstoffzelle auch die Brennstoffenergie direkt in elektrische Energie umgewandelt werden und so insgesamt elektrische Energie bereitgestellt werden.

Als Kraftmaschinen beziehungsweise Kraftmaschinenelemente können beispielsweise Otto-, Diesel- und/oder Stirling-Motoren sowie Brennstoffzellensysteme zum Einsatz kommen. Diese Kraft-Wärme-Kopplungsanlagen verfügen typischerweise über ein konstantes Verhältnis von Stromerzeugung zur Wärmeerzeugung. Ihre Flexibilität bezüglich variierender Strom- und Wärmeerzeugung ist stark limitiert. Zwar können die Kraft-Wärme-Kopplungsanlagen im Teillastbetrieb betrieben werden, wobei jedoch dann gleichzeitig die Strom- und Wärmeerzeugung absinkt. Eine sich zeitlich ändernde Nachfrage an Strom und Wärme kann somit nicht bedient werden. Aus diesem Grund werden derartige Kraft-Wärme-Kopplungsanlagen heute nur zur zusätzlichen Strom- und Wärmeversorgung eingesetzt, um eine Grundlast abzudecken. Zur Realisierung einer hinreichenden Flexibilität und für die Abdeckung von Nachfragespitzen sind weiterhin ein elektrischer Netzanschluss für die Stromversorgung und beispielsweise ein brennstoffgefeuerter Spitzenlastkessel zur Wärmeversorgung erforderlich.

Außerdem offenbart die JP 2001 229961 A eine Kraft-Wärme-Kopplungsanlage, mit wenigstens einer Kraftmaschine, mittels welcher unter Bereitstellen von Abgas elektrische Energie bereitstellbar ist. Ferner ist wenigstens eine Hochtemperatur-Batterie vorgesehen, in welcher die von der Kraftmaschine bereitgestellte elektrische Energie speicherbar ist, wobei die Hochtemperatur-Batterie mittels des von der Kraftmaschine bereitgestellten Abgases zum Warmhalten der Hochtemperatur-Batterie versorgbar ist.

Des Weiteren ist der DE 10 2012 010 270 A1 eine Anlage zur Kraft-Wärmekopplung als bekannt zu entnehmen. Die Anlage umfasst einen Stromerzeuger und zumindest ein Wärmespeichersystem zum Speichern und Bereitstellen von bei der Stromerzeugung anfallender Wärmeenergie.

Dabei ist es vorgesehen, dass der Stromerzeuger Wärme auf verschiedenen Temperaturniveaus liefert, und dass die Anlage zur Kraft-Wärmekopplung mindestens ein Hochtemperatur-Wärmespeichersystem zum Speichern von Wärme auf hohem Temperaturniveau und mindestens ein Niedertemperatur-Wärmespeichersystem zum Speichern von Wärme auf niedrigem Temperaturniveau umfasst.

Aufgabe der vorliegenden Erfindung ist es daher, eine Kraft-Wärme-Kopplungsanlage bereitzustellen, mittels welcher sich eine besonders vorteilhafte dezentrale Strom- und Wärmeversorgung mit der Abdeckung von Spitzenlasten realisieren lässt.

Diese Aufgabe wird durch eine Kraft-Wärme-Kopplungsanlage mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die erfindungsgemäße Kraft-Wärme-Kopplungsanlage zur dezentralen Strom- und Wärmeversorgung umfasst wenigstens eine Kraftmaschine, mittels welcher unter Bereitstellen von Abgas und durch Umwandeln von mechanischer Energie in elektrische Energie die elektrische Energie bereitstellbar ist. Hierzu umfasst die Kraftmaschine beispielsweise wenigstens ein Kraftmaschinenelement oder wenigstens eine Kraftmaschinenkomponente, mittels welchem beziehungsweise mittels welcher ein Kraftstoff verbrennbar und durch das Verbrennen des Kraftstoffes mechanische Energie bereitstellbar ist. Dies bedeutet, dass mittels des Kraftmaschinenelements im Kraftstoff gespeicherte Energie genutzt und insbesondere in mechanische Energie umgewandelt werden kann, welche von dem Kraftmaschinenelement bereitgestellt wird. Beispielsweise wird die mechanische Energie über wenigstens eine Antriebswelle des Kraftmaschinenelements bereitgestellt.

Ferner umfasst die Kraftmaschine beispielsweise wenigstens einen Generator, welchem die von dem Kraftmaschinenelement bereitgestellte mechanische Energie zugeführt wird. Mittels des Generators wird die von dem Kraftmaschinenelement bereitgestellte mechanische Energie in elektrische Energie umgewandelt, welche schließlich bereitgestellt werden kann.

Die Kraft-Wärme-Kopplungsanlage umfasst wenigstens einen Wärmespeicher zum Speichern von von dem Abgas bereitgestellter Wärmeenergie. Durch das Verbrennen des Kraftstoffes entsteht Abgas, welches eine gewisse Temperatur aufweist und demzufolge eine gewisse Wärmeenergie enthält. Zumindest ein Teil der Wärmeenergie kann in dem Wärmespeicher gespeichert werden, wobei die im Wärmespeicher gespeicherte Wärmeenergie beispielsweise für Heizzwecke genutzt werden kann. Mit der von der Kraftmaschine bereitgestellten elektrischen Energie, insbesondere elektrischem Strom, kann beispielsweise wenigstens ein elektrischer Verbraucher versorgt und dadurch betrieben werden.

Die erfindungsgemäße Kraft-Wärme-Kopplungsanlage umfasst darüber hinaus wenigstens eine Hochtemperatur-Batterie, in welcher die von der Kraftmaschine bereitgestellte elektrische Energie speicherbar ist. Unter der Hochtemperatur-Batterie ist beispielsweise eine Batterie zu verstehen, welche einen Betriebstemperaturbereich von einschließlich 250 Grad Celsius bis einschließlich 350 Grad Celsius aufweist. Beispielsweise weist die Hochtemperatur-Batterie in dem genannten Betriebstemperaturbereich ihre höchstmögliche Kapazität zum Speichern von elektrischer Energie, insbesondere elektrischem Strom, auf.

Die Hochtemperatur-Batterie ist dabei mittels des von der Kraftmaschine bereitgestellten Abgases zum Warmhalten der Hochtemperatur-Batterie versorgbar. Hierzu ist beispielsweise eine Abgasverrohrung vorgesehen, welche von dem von der Kraftmaschine bereitgestellten Abgas durchströmbar ist. Mittels der Abgasverrohrung wird das Abgas von der Kraftmaschine zur Hochtemperatur-Batterie geführt, sodass die Hochtemperatur-Batterie über die Abgasverrohrung mit dem von der Kraftmaschine bereitgestellten Abgas versorgt und dadurch warmgehalten wird. Die Hochtemperatur-Batterie, insbesondere wenigstens eine Batteriezelle der Hochtemperatur-Batterie, ist beispielsweise zumindest teilweise von zumindest einem Kanal umgeben, wobei der Kanal fluidisch mit der Abgasverrohrung verbunden ist. Dadurch kann das die Abgasverrohrung durchströmende Abgas in den Kanal einströmen und den Kanal durchströmen, sodass die Hochtemperatur-Batterie infolge eines Wärmeübergangs von dem Abgas an die Hochtemperatur-Batterie erwärmt beziehungsweise warmgehalten wird. Dadurch kann die Hochtemperatur-Batterie mittels des Abgases in ihrem Betriebstemperaturbereich gehalten werden, sodass sich ein besonders effizienter Betrieb der Hochtemperatur-Batterie und der Kraft-Wärme-Kopplungsanlage insgesamt realisieren lässt.

Hochtemperatur-Batterien erlauben eine besonders effiziente und kostengünstige elektrische Energiespeicherung. Beispiele für Hochtemperatur-Batterien sind die Natrium-Schwefel-Batterie (NaS) und die Natrium-Nickel-Chlorid-Batterie (NaNiCl oder ZEBRA-Batterie). Diese Hochtemperatur-Batterien arbeiten bei Temperaturen von 250 Grad Celsius bis 350 Grad Celsius und erreichen insbesondere bei diesen Temperaturen sehr hohe elektrische Speicherwirkungsgrade von teilweise über 90 Prozent. Die hohe Betriebstemperatur beziehungsweise der hohe Betriebstemperaturbereich ist vorteilhaft bezüglich der Reaktionskinetik, kann gegebenenfalls aber zu thermischen Verlusten während des Betriebs, aber auch beim Stillstand der Hochtemperatur-Batterie führen. Unter dem Betrieb der Hochtemperatur-Batterie ist zu verstehen, dass die Hochtemperatur-Batterie mit elektrischer Energie geladen, das heißt dass der Hochtemperatur-Batterie elektrische Energie zugeführt wird und dass die Hochtemperatur-Batterie entladen, das heißt dass elektrische Energie aus der Hochtemperatur-Batterie abgeführt wird. Unter dem Stillstand der Hochtemperatur-Batterie ist zu verstehen, dass sich die Hochtemperatur-Batterie in einem Stand-by-Betrieb befindet, in welchem die Hochtemperatur-Batterie weder geladen noch entladen wird, aber bei hoher Betriebstemperatur gehalten werden muss.

Durch das Versorgen der Hochtemperatur-Batterie mit dem Abgas kann die Hochtemperatur-Batterie besonders effizient warmgehalten und somit in ihrem Betriebstemperaturbereich gehalten werden, ohne dass hierzu elektrische Energie verbraucht beziehungsweise aufgewendet werden müsste. Soll eine Hochtemperatur-Batterie üblicherweise während ihres Stillstands, welcher auch als Nicht-Betrieb bezeichnet wird, betriebsbereit gehalten werden, so kommen beispielsweise elektrische Heizelemente zum Einsatz, um Wärmeverluste auszugleichen. Da die elektrischen Heizelemente üblicherweise durch den elektrischen Energiegehalt der Hochtemperatur-Batterie betrieben werden, sinkt während des Stand-by-Betriebs der Ladezustand der Hochtemperatur-Batterie kontinuierlich ab. Gerade kleine Batterieeinheiten für die dezentrale Versorgung besitzen hohe spezifische Wärmeverluste und verursachen damit eine hohe Selbstentladung im Stand-by-Betrieb. Diese Problematik kann bei der erfindungsgemäßen Kraft-Wärme-Kopplungsanlage vermieden oder zumindest gering gehalten werden, da die Hochtemperatur-Batterie mittels des Abgases beziehungsweise mittels Wärmeenergie, die im Abgas enthalten ist und ansonsten ungenutzt verloren gehen würde, warmgehalten werden kann.

Da bei der erfindungsgemäßen Kraft-Wärme-Kopplungsanlage die Kraftmaschine und die Hochtemperatur-Batterie zum Einsatz kommen, ist die Kraft-Wärme-Kopplungsanlage als Hybridanlage ausgebildet, mittels welcher sich eine gesicherte dezentrale Strom- und Wärmeversorgung realisieren lässt. Ein Grundbedarf an elektrischer Energie beziehungsweise elektrischem Strom kann durch die Kraftmaschine bedient werden. Gegenüber dem Grundbedarf wesentlich höhere Spitzenlasten können mittels der Hochtemperatur-Batterie bedient beziehungsweise bereitgestellt werden, wobei beispielsweise bei Spitzenlasten sowohl die Kraftmaschine als auch die Hochtemperatur-Batterie elektrische Energie, insbesondere elektrischen Strom, zum Versorgen von entsprechenden elektrischen Verbrauchern bereitstellen. Hierdurch können eine besonders hohe Zuverlässigkeit und Verfügbarkeit bei der Strom- und Wärmeversorgung realisiert werden, insbesondere gegenüber bekannten Blockheizkraftwerk-Lösungen.

Darüber hinaus ist es insbesondere mittels der Hochtemperatur-Batterie möglich, überschüssige, regenerativ produzierte Strommengen aus einem zentralen Stromnetz oder aus anderen dezentralen Stromerzeugern (z.B. Photovoltaik- und Windkraftanlagen) aufzunehmen und beispielsweise in der Hochtemperatur-Batterie zu speichern und/oder insbesondere mittels einer elektrischen Wärmeeinrichtung in Wärme umzuwandeln und diese Wärme in dem Wärmespeicher zu speichern. Darüber hinaus lässt sich eine besonders bedarfsorientierte Wiedergabe der gespeicherten Energie als Strom oder Wärme darstellen. Im Vergleich zu herkömmlichen Blockheizkraftwerk-Lösungen mit vergleichbaren elektrischen Leistungsdaten lässt sich durch die Kombination der Kraftmaschine mit den beiden Speichern in Form der Hochtemperatur-Batterie und des Wärmespeichers eine deutlich größere Bandbreite im Regelbereich zur Strom- und Wärmeabgabe sowie Strom- und Wärmeaufnahme realisieren.

Erfindungsgemäß ist wenigstens eine elektrische Heizeinrichtung zum Beheizen des Wärmespeichers vorgesehen. Die elektrische Heizeinrichtung kann dabei als elektrische Widerstandsheizung oder als Wärmepumpe ausgebildet sein und gewährleistet insbesondere eine kurzzeitige hohe Wärmeproduktion, um dadurch Spitzenlasten in der Wärmeversorgung zu bedienen. Ferner ist es dadurch beispielsweise möglich, aus einem zentralen Stromnetz oder aus anderen dezentralen Stromerzeugern (z.B. Photovoltaik- und Windkraftanlagen) aufgenommene elektrische Energie mittels der elektrischen Heizeinrichtung in Wärme beziehungsweise Wärmeenergie umzuwandeln und diese Wärme beziehungsweise Wärmeenergie in dem Wärmespeicher zu speichern.

Ferner ist es vorgesehen, dass die elektrische Heizeinrichtung mit der Hochtemperatur-Batterie elektrisch verbunden und mit in der Hochtemperatur-Batterie gespeicherter elektrischer Energie versorgbar und betreibbar ist. Hierdurch kann somit in der Hochtemperatur-Batterie gespeicherte elektrische Energie genutzt werden, um die elektrische Heizeinrichtung zu betreiben. Mittels der elektrischen Heizeinrichtung wird in der Hochtemperatur-Batterie gespeicherte elektrische Energie in Wärmeenergie umgewandelt, welche in dem Wärmespeicher gespeichert beziehungsweise über den Wärmespeicher für Heizzwecke genutzt werden kann.

Als besonders vorteilhaft hat es sich gezeigt, wenn die elektrische Heizeinrichtung in den Wärmespeicher integriert ist. Hierdurch lässt sich ein besonders kompakter Aufbau schaffen. Ferner kann dadurch der Wärmespeicher besonders effizient erwärmt werden.

Alternativ oder zusätzlich ist es vorgesehen, dass die elektrische Heizeinrichtung mit der Kraftmaschine elektrisch verbunden ist, sodass die elektrische Heizeinrichtung mit von der Kraftmaschine bereitgestellter elektrischer Energie versorgbar und dadurch betreibbar ist.

Alternativ oder zusätzlich kann auch eine thermische Heizeinrichtung, ein sogenannter Spitzenlastkessel, vorgesehen sein. Dabei wird dann in Zeiten einer Nachfrage hoher Wärmeenergie Brennstoff verbrannt und dadurch die Wärmenachfrage bedient. Dieser Spitzenlastkessel kann mit dem Wärmespeicher verbunden sein.

In besonders vorteilhafter Ausgestaltung der Erfindung ist in Strömungsrichtung des Abgases von der Kraftmaschine zur Hochtemperatur-Batterie zwischen der Hochtemperatur-Batterie und der Kraftmaschine wenigstens ein Wärmeübertrager angeordnet, mittels welchem unter Kühlen des Abgases Wärmeenergie von dem Abgas an den Wärmespeicher übertragbar ist. Der Wärmeübertrager ist beispielsweise in der genannten Abgasverrohrung angeordnet und dabei in Strömungsrichtung des Abgases durch die Abgasverrohrung zwischen der Kraftmaschine und der Hochtemperatur-Batterie positioniert. Die Verwendung des Wärmeübertragers ist insbesondere dann vorteilhaft, wenn das von der Kraftmaschine bereitgestellte Abgas stromauf der Hochtemperatur-Batterie eine Temperatur aufweist, welche höher als die Betriebstemperatur beziehungsweise der Betriebstemperaturbereich der Hochtemperatur-Batterie ist. Mittels des Wärmeübertrages kann dann das Abgas gekühlt werden, sodass in der Folge die Hochtemperatur-Batterie mittels des gekühlten Abgases in dem Betriebstemperaturbereich gehalten werden kann. Durch die mittels des Wärmeübertrages bewirkte Kühlung des Abgases wird dem Abgas Wärme beziehungsweise Wärmeenergie entzogen. Diese dem Abgas entzogene Wärme geht jedoch nicht ungenutzt verloren, sondern wird über den Wärmeübertrager in dem Wärmespeicher gespeichert, sodass sich ein besonders effizienter Betrieb der Kraft-Wärme-Kopplungsanlage realisieren lässt.

Eine weitere Ausführungsform zeichnet sich dadurch aus, dass der Hochtemperatur-Batterie wenigstens ein elektrisches Heizelement zum Erwärmen der Hochtemperatur-Batterie zugeordnet ist. Mit anderen Worten kann die Hochtemperatur-Batterie mittels des elektrischen Heizelements erwärmt beziehungsweise warmgehalten werden. Dieses Warmhalten beziehungsweise Erwärmen der Hochtemperatur-Batterie ist mittels des elektrischen Heizelements insbesondere dann möglich, wenn die Kraftmaschine nicht betrieben wird und demzufolge kein Abgas bereitstellt oder wenn das von der Kraftmaschine bereitgestellte Abgas, insbesondere während einer Warmlaufphase der Kraftmaschine, eine Temperatur aufweist, welche geringer als der Betriebstemperaturbereich der Hochtemperatur-Batterie ist. Dieser Ausführungsform liegt die Idee zugrunde, die Hochtemperatur-Batterie mittels des elektrischen Heizelements insbesondere unabhängig von der Kraftmaschine und unabhängig von dem Wärmespeicher zu erwärmen beziehungsweise warm zu halten, da der Wärmespeicher beispielsweise eine maximale Temperatur von 160 Grad aufweist, welche wesentlich geringer als der Betriebstemperaturbereich der Hochtemperatur-Batterie ist. Insbesondere kann die Hochtemperatur-Batterie mittels des elektrischen Heizelements warmgehalten beziehungsweise erwärmt werden, wenn die Kraftmaschine über eine lange Zeitdauer abgeschaltet ist und demzufolge kein Abgas bereitstellt.

Dabei hat es sich als besonders vorteilhaft gezeigt, wenn das elektrische Heizelement mit der Hochtemperatur-Batterie elektrisch verbunden und mit in der Hochtemperatur-Batterie gespeicherter elektrischer Energie versorgbar und betreibbar ist. Dadurch lässt sich ein besonders effizienter Betrieb der Kraft-Wärme-Kopplungsanlage realisieren.

In besonders vorteilhafter Ausgestaltung der Erfindung ist wenigstens ein Gebläse vorgesehen, mittels welchem ein Gasstrom erzeugbar und die Hochtemperatur-Batterie mit dem Gasstrom zum Kühlen der Hochtemperatur-Batterie versorgbar ist. Bei dem Gasstrom handelt es sich beispielsweise um Luft beziehungsweise einen Luftstrom, mittels welchem die Hochtemperatur-Batterie gekühlt wird. Dadurch kann die Hochtemperatur-Batterie in ihrem Betriebstemperaturbereich gehalten werden, sodass sich ein besonders effizienter Betrieb der Hochtemperatur-Batterie realisieren lässt.

Bei dem Gasstrom kann es sich um Abgas beziehungsweise um einen Abgasstrom handeln, welcher stromab der Hochtemperatur-Batterie abgezweigt und zur Hochtemperatur-Batterie rückgeführt wird. Da der Abgasstrom stromab der Hochtemperatur-Batterie abgezweigt wird, weist der abgezweigte und rückgeführte Abgasstrom eine geringere Temperatur als das Abgas stromauf der Hochtemperatur-Batterie auf, sodass die Hochtemperatur-Batterie mittels des abgezweigten und rückgeführten Abgasstroms effektiv gekühlt werden kann.

Schließlich hat es sich als besonders vorteilhaft gezeigt, wenn eine Rezirkulationseinrichtung vorgesehen ist, mittels welcher das Abgas von einer stromab der Hochtemperatur-Batterie angeordneten Abzweigstelle zur Hochtemperatur-Batterie und/oder zu einer stromauf der Hochtemperatur-Batterie angeordneten Einführstelle rückführbar ist. Wie bereits angedeutet, kann das Abgas stromab der Hochtemperatur-Batterie abgezweigt und zur Hochtemperatur-Batterie rückgeführt und dabei beispielsweise direkt in die Hochtemperatur-Batterie eingeleitet werden, um die Hochtemperatur-Batterie zu kühlen.

Alternativ oder zusätzlich ist es möglich, das Abgas von stromab der Hochtemperatur-Batterie zur Einführstelle rückzuführen, wobei die Einführstelle in Strömungsrichtung des Abgases stromauf der Hochtemperatur-Batterie angeordnet ist. Hierbei kann die Einführstelle in Strömungsrichtung des Abgases zwischen der Kraftmaschine und der Hochtemperatur-Batterie angeordnet sein, sodass beispielsweise das rückgeführte Abgas in die genannte Abgasverrohrung eingeleitet wird. Das rückgeführte Abgas kann dann von der Einführstelle zur Hochtemperatur-Batterie strömen und diese kühlen.

Darüber hinaus kann vorgesehen sein, dass die Einführstelle an der Kraftmaschine oder stromauf dieser angeordnet ist. Dies bedeutet, dass das abgezweigte und rückgeführte Abgas zur Kraftmaschine rückgeführt werden kann, sodass die Kraftmaschine mittels des abgezweigten und rückgeführten Abgases erwärmt, insbesondere vorgewärmt, werden kann. Hierdurch ist es beispielsweise möglich, die Kraftmaschine, nachdem diese eine längere Zeit abgeschaltet war, vor ihrer Aktivierung zu erwärmen, das heißt vorzuwärmen, um dadurch einen Kaltstart der Kraftmaschine zu vermeiden. Dadurch kann ein besonders effizienter Betrieb der Kraftmaschine realisiert werden. Ferner ist es möglich, die Kraftmaschine während ihres auf einen Kaltstart folgenden Warmlaufs mit dem rückgeführten Abgas zu beheizen, sodass der Warmlauf besonders kurz gehalten und die Kraftmaschine besonders schnell in einen vorteilhaften Betriebstemperaturbereich gebracht werden kann. Auch dies kommt dem effizienten Betrieb der Kraftmaschine und somit der Kraft-Wärme-Kopplungsanlage insgesamt zugute.

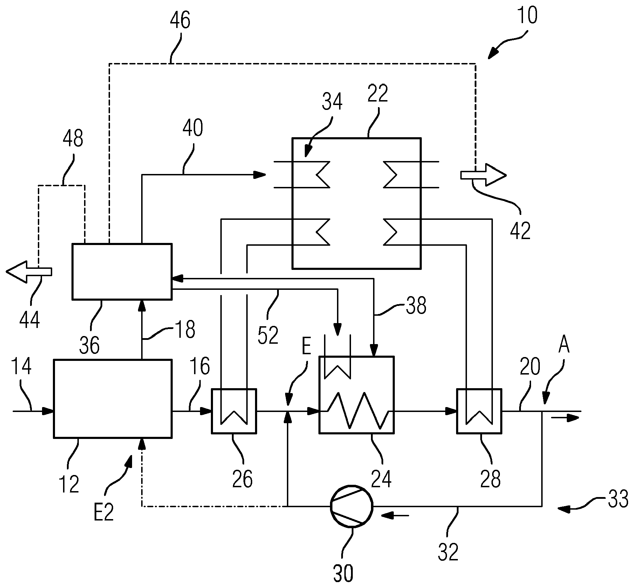

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung einer Kraft-Wärme-Kopplungsanlage zur dezentralen Strom- und Wärmeversorgung, mit einer Kraftmaschine, einem Wärmespeicher und einer Hochtemperatur-Batterie.

Die einzige Figur zeigt in einer schematischen Darstellung eine im Ganzen mit 10 bezeichnete Kraft-Wärme-Kopplungsanlage zur dezentralen Strom- und Wärmeversorgung. Die beispielsweise als Klein-Kraft-Wärme-Kopplungsanlage ausgebildete Kraft-Wärme-Kopplungsanlage 10 wird auch als KWK-Anlage (KWK - Kraft-Wärme-Kopplung) bezeichnet und umfasst eine Kraftmaschine 12, mittels welcher unter Bereitstellen von Abgas und durch Umwandeln von mechanischer Energie in elektrische Energie oder durch die direkte Umwandlung von Brennstoffenergie in elektrische Energie die elektrische Energie bereitstellbar ist. Hierzu wird der Kraftmaschine 12 - wie in der Figur durch einen Richtungspfeil 14 veranschaulicht ist - ein Kraftstoff oder Brennstoff zugeführt. Der Kraftstoff wird in der Kraftmaschine 12 umgesetzt, wodurch Abgas entsteht. Durch Umsetzen des Kraftstoffs wird beispielsweise wenigstens eine Kraftmaschinekomponente der Kraftmaschine 12 angetrieben, wobei die Kraftmaschinenkomponente mittels des Kraftstoffs angetrieben wird.

Die Kraftmaschinenkomponente nutzt somit im Kraftstoff gespeicherte Energie und wandelt diese Energie in mechanische Energie um, welche von der Kraftmaschinenkomponente beispielsweise über eine Antriebswelle bereitgestellt wird, oder wandelt diese Energie direkt in elektrische Energie um. Die Kraftmaschinenkomponente ist beispielsweise eine Brennkraftmaschine, welche als Hubkolben-Brennkraftmaschine ausgebildet sein kann. Beispielsweise handelt es sich bei der Brennkraftmaschine um einen Otto-Motor oder einen Diesel-Motor. Die Kraftmaschinenkomponente kann alternativ als Stirling-Motor, Wankel-Motor oder aber als Gasturbine, insbesondere Mikro-Gasturbine, Brennstoffzelle oder dergleichen Kraftmaschine ausgebildet sein. Die Kraftmaschine 12 stellt das aus der Umsetzung des Kraftstoffs resultierende Abgas bereit, was in der Figur durch einen Richtungspfeil 16 veranschaulicht ist. Ferner stellt die Kraftmaschine 12 die elektrische Energie insbesondere in Form von elektrischem Strom bereit, was in der Figur durch einen Richtungspfeil 18 veranschaulicht ist.

Der Kraftstoff wird beispielsweise in wenigstens einem Brennraum der Kraftmaschine 12 verbrannt. Hierbei ist beispielsweise eine Abgasverrohrung 20 mit dem Brennraum fluidisch verbunden, sodass das Abgas aus dem Brennraum ausströmen und in die Abgasverrohrung 20 einströmen kann. Die Abgasverrohrung 20 ist somit von dem Abgas durchströmbar und dient insbesondere zum Führen des Abgases.

Die KWK-Anlage umfasst ferner wenigstens einen Wärmespeicher 22, in welchem - wie im Folgenden noch erläutert wird - von dem Abgas bereitgestellte Wärmeenergie gespeichert wird. Darüber hinaus umfasst die KWK-Anlage eine Hochtemperatur-Batterie 24, in welcher die von der Kraftmaschine 12 bereitgestellte elektrische Energie speicherbar ist. Die Hochtemperatur-Batterie 24 ist dabei mittels des von der Kraftmaschine 12 bereitgestellten Abgases zum Warmhalten der Hochtemperatur-Batterie 24 versorgbar. Aus der Figur ist erkennbar, dass die Hochtemperatur-Batterie 24 in der Abgasverrohrung 20 angeordnet ist. Dadurch wird das die Abgasverrohrung 20 durchströmende Abgas zur Hochtemperatur-Batterie 24 geführt, sodass die Hochtemperatur-Batterie 24 mittels des Abgases warmgehalten werden kann. Die Hochtemperatur-Batterie 24 weist beispielsweise einen Betriebstemperaturbereich von einschließlich 250 Grad Celsius bis einschließlich 350 Grad Celsius auf. Hierbei kann die Hochtemperatur-Batterie 24 mittels des Abgases in diesem Betriebstemperaturbereich gehalten werden.

In Strömungsrichtung des Abgases von der Kraftmaschine 12 zur Hochtemperatur-Batterie 24 ist zwischen der Kraftmaschine 12 und der Hochtemperatur-Batterie 24 ein erster Wärmeübertrager 26 angeordnet. Mittels des Wärmeübertrages 26 wird unter Kühlen des Abgases Wärmeenergie von dem Abgas an den Wärmespeicher 22 übertragen, da der Wärmeübertrager 26 beispielsweise wärmetechnisch mit dem Wärmespeicher 22 gekoppelt ist. Wichtig ist, dass das Abgas, das der Hochtemperatur-Batterie 24 zugeführt wird, eine Temperatur von mindestens 250 Grad Celsius bis 350 Grad Celsius aufweist, sodass die Hochtemperatur-Batterie 24 in ihrem Betriebstemperaturbereich gehalten werden kann. Liegt die Temperatur des Abgases oberhalb von 250 Grad Celsius bis 350 Grad Celsius, so kommt der Wärmeübertrager 26 zum Einsatz, mittels welchem das Abgas auf eine Temperatur von 250 Grad Celsius bis 350 Grad Celsius gekühlt wird. Hierzu wird mittels des Wärmeübertrages 26 Wärme beziehungsweise Wärmeenergie aus dem Abgas abgeführt, wobei diese abgeführte Wärme zum Beheizen des Wärmespeichers 22 genutzt wird. Weist das Abgas der Kraftmaschine 12 jedoch eine Temperatur in einem Bereich von 250 Grad Celsius bis 350 Grad Celsius auf, so ist eine Kühlung nicht notwendig. Dies bedeutet, dass dann der Wärmeübertrager 26 entfallen kann.

Beispielsweise wird das Abgas indirekt durch die Hochtemperatur-Batterie 24 geführt, wobei ein Wärmeübergang von dem Abgas an die Hochtemperatur-Batterie 24 erfolgt. Dadurch kann eine stabile Temperatur der Hochtemperatur-Batterie 24 auch dann gewährleistet werden, wenn die Hochtemperatur-Batterie 24 nicht betrieben wird. Unter dem Betrieb der Hochtemperatur-Batterie 24 ist zu verstehen, dass die Hochtemperatur-Batterie 24 mit elektrischer Energie beziehungsweise elektrischem Strom aufgeladen beziehungsweise geladen und entladen wird. In einem Stillstand oder einem sogenannten Stand-by-Betrieb der Hochtemperatur-Batterie 24 wird diese weder geladen noch entladen.

Durch das Versorgen und Warmhalten beziehungsweise Beheizen der Hochtemperatur-Batterie 24 mit dem Abgas der Kraftmaschine 12 können Wärmeverluste ausgeglichen werden und eine Selbstentladung der Hochtemperatur-Batterie 24 findet nicht statt. Das Abgas wird mittels der Hochtemperatur-Batterie 24 beispielsweise infolge eines Wärmeübergangs von dem Abgas an die Hochtemperatur-Batterie 24 leicht gekühlt, sodass das Abgas stromab der Hochtemperatur-Batterie 24 eine geringere Temperatur als stromauf der Hochtemperatur-Batterie 24 aufweist. Alternativ zu der Darstellung in der Figur kann auch nur ein Teilstrom des Abgases durch die Hochtemperatur-Batterie geführt werden.

Das beispielsweise in der Hochtemperatur-Batterie 24 nur leicht abgekühlte Abgas strömt dann zu einem zweiten Wärmeübertrager 28, welcher - wie aus der Figur erkennbar ist - in der Abgasverrohrung 20 stromab der Hochtemperatur-Batterie 24 angeordnet ist. Mittels des zweiten Wärmeübertragers 28 wird die von dem Abgas bereitgestellte Wärmeenergie an den Wärmespeicher 22 übertragen, sodass der Wärmespeicher 22 beheizt beziehungsweise die von dem Abgas bereitgestellte Wärmeenergie in dem Wärmespeicher 22 gespeichert wird. Mit anderen Worten dient der zweite Wärmeübertrager 28 dazu, zumindest einen Teil der im Abgas verbliebenen Wärme an den Wärmespeicher 22 abzugeben. Während des Betriebs der Hochtemperatur-Batterie 24, das heißt während ihrer Aufladung oder Entladung, wird Wärme freigesetzt. Diese Wärmefreisetzung ist üblicherweise gering und führt dann zu einer geringen Temperaturerhöhung des Abgases, sodass das Abgas stromab der Hochtemperatur-Batterie 24 eine höhere Temperatur aufweist als zwischen der Hochtemperatur-Batterie 24 und dem ersten Wärmeübertrager 26. In diesem Betriebszustand wird das der Hochtemperatur-Batterie 24 zugeführte Abgas als Kühlmedium zum Kühlen der Hochtemperatur-Batterie 24 eingesetzt.

Reicht diese Kühlleistung des Abgases nicht aus und/oder ist eine Kühlung erforderlich, beispielsweise dann, wenn die Kraftmaschine 12 nicht im Betrieb ist, kommt beispielsweise ein Gebläse 30 zum Erzeugen eines Gasstroms zum Einsatz. Mit anderen Worten kann mittels des Gebläses 30 ein Gas unter Ausbildung eines Gasstroms gefördert werden, wobei die Hochtemperatur-Batterie 24 mit diesem Gasstrom versorgbar und mittels des Gasstroms zu kühlen ist.

Es kann vorgesehen sein, dass das Gas beziehungsweise der Gasstrom Luft beziehungsweise ein Luftstrom ist, mittels welchem die Hochtemperatur-Batterie 24 gekühlt werden kann. Der mittels des Gebläses 30 erzeugte Gasstrom wird beispielsweise durch die Hochtemperatur-Batterie 24 hindurch geführt.

Das Gebläse 30 ist beispielsweise als elektrisches Gebläse ausgebildet und umfasst einen Elektromotor und ein Lüfterrad, welches zum Erzeugen des Gasstroms mittels des Elektromotors antreibbar ist. Beispielsweise ist der Elektromotor des Gebläses 30 elektrisch mit der Kraftmaschine 12 und/oder der Hochtemperatur-Batterie 24 verbunden, sodass der Elektromotor des Gebläses 30 mit elektrischem Strom beziehungsweise elektrischer Energie, der beziehungsweise die von der Kraftmaschine 12 und/oder von der Hochtemperatur-Batterie 24 bereitgestellt wird, versorgt und betrieben werden kann.

Aus der Figur ist erkennbar, dass das Gebläse 30 vorliegend in einer Rückführleitung 32 einer im Ganzen mit 33 bezeichneten Rezirkulationseinrichtung der KWK-Anlage angeordnet ist. Die Rückführleitung 32 ist an einer Abzweigstelle A sowie an einer Einführstelle E fluidisch mit der Abgasverrohrung 20 verbunden, wobei die Abzweigstelle A stromab der Hochtemperatur-Batterie 24, insbesondere stromab des zweiten Wärmeübertragers 28, angeordnet ist. Die Einführstelle E ist dabei stromauf der Hochtemperatur-Batterie 24 und vorliegend in Strömungsrichtung des Abgases durch die Abgasverrohrung 20 zwischen dem ersten Wärmeübertrager 26 und der Hochtemperatur-Batterie 24 angeordnet. Mittels des Wärmeübertragers 28 wird das Abgas gekühlt, sodass es an der Abzweigstelle A eine geringere Temperatur aufweist als an der Einführstelle E. Mittels der Rezirkulationseinrichtung 33 kann das Abgas an der Abzweigstelle A aus der Abgasverrohrung 20 abgezweigt und zur Einführstelle E rückgeführt und an der Einführstelle E in die Abgasverrohrung 20 eingeführt werden. Das abgezweigte und rückgeführte Abgas kann dann die Hochtemperatur-Batterie 24 umströmen beziehungsweise durchströmen, wodurch die Hochtemperatur-Batterie 24 mittels des abgezweigten und rückgeführten Abgases gekühlt wird.

Hierbei dient das Gebläse 30 zum Abzweigen des Abgases an der Abzweigstelle A aus der Abgasverrohrung 20 und zum Fördern des abgezweigten Abgases zur Einführstelle E, sodass der mittels des Gebläses 30 erzeugte beziehungsweise erzeugbare Gasstrom ein Abgasstrom aus abgezweigtem Abgas ist.

Aus der Figur ist erkennbar, dass die Rückführleitung 32 optional an einer weiteren Einführstelle E2 mit der Kraftmaschine 12 fluidisch verbunden ist, sodass das abgezweigte und rückgeführte Abgas der Kraftmaschine 12 zugeführt werden kenn. Dadurch kann im Abgas enthaltene Abwärme, insbesondere der Hochtemperatur-Batterie 24, genutzt werden, um die Kraftmaschine 12, insbesondere ihre Brennkraftmaschine, zu erwärmen, insbesondere vorzuwärmen. Dies ist dann sinnvoll, wenn die Kraftmaschine 12 kalt ist und ein Start bevorsteht. Mittels des zur weiteren Einführstelle E2 rückgeführten Abgases ist es somit möglich, die Kraftmaschine 12 vor ihrem eigentlichen Start zu erwärmen, sodass eigentliche Kaltstarts der Kraftmaschine 12 vermieden werden können. Durch diese Vorwärmung können sowohl kaltstartbedingte Lebensdauerbeeinträchtigungen als auch erhöhte Emissionen beim Start der Kraftmaschine 12 zumindest gering gehalten werden.

Die Kraft-Wärme-Kopplungsanlage 10 umfasst darüber hinaus eine elektrische Heizeinrichtung 34, welche vorliegend in den Wärmespeicher 22 integriert ist. Mittels der elektrischen Heizeinrichtung 34, welche beispielsweise als Wärmepumpe oder elektrische Widerstandsheizung ausgebildet ist, kann der Wärmespeicher 22 im Bedarfsfall beheizt werden.

Ferner umfasst die Kraft-Wärme-Kopplungsanlage 10 eine elektrische Steuereinheit 36, welche, wie anhand des Richtungspfeils 18 und anhand eines Richtungspfeils 38 erkennbar ist, elektrisch mit der Kraftmaschine 12 und mit der Hochtemperatur-Batterie 24 verbunden ist. Ferner ist die elektrische Steuereinheit 36, wie anhand eines Richtungspfeils 40 erkennbar ist, mit der elektrischen Heizeinrichtung 34 verbunden. Hierdurch sind die Kraftmaschine 12, die Hochtemperatur-Batterie 24 und die elektrische Heizeinrichtung 34 über die elektrische Steuereinheit 36 elektrisch miteinander verbunden. Anhand eines Richtungspfeils 42 ist eine Nachfrage nach Wärmeenergie veranschaulicht, welche mittels des Wärmespeichers 22 bedient wird. Mit anderen Worten veranschaulicht der Richtungspfeil 42 die Abfuhr von Wärme beziehungsweise Wärmeenergie aus dem Wärmespeicher 22, wobei die abgeführte Wärmeenergie für Heizzwecke genutzt wird. Darüber hinaus veranschaulicht ein Richtungspfeil 44 eine Nachfrage nach elektrischem Strom beziehungsweise elektrischer Energie. Diese Nachfrage, welche auch als Stromnachfrage bezeichnet wird, wird über die elektrische Steuereinheit 36 bedient. Zum Bedienen der Stromnachfrage wird beispielsweise elektrische Energie genutzt, welche von der Kraftmaschine 12 und/oder von der Hochtemperatur-Batterie 24 bereitgestellt wird. Durch gestrichelte Linien 46 und 48 ist in der Figur veranschaulicht, dass die jeweilige Nachfrage nach Wärme beziehungsweise Wärmeenergie und nach elektrischer Energie mittels der elektrischen Steuereinheit 36 erfasst wird. Hierzu werden der elektrischen Steuereinheit 36 jeweilige Signale zugeführt, welche die jeweilige Nachfrage charakterisieren, wobei die elektrische Steuereinheit 36 diese Signale empfängt. Die elektrische Steuereinheit 36 stellt dabei einen jeweiligen, aktuellen Strom- und Wärmebedarf fest und greift dann in den jeweiligen Betrieb der Komponenten in Form der Kraftmaschine 12, der Hochtemperatur-Batterie 24 und der elektrischen Heizeinrichtung 34 ein. Dies bedeutet, dass die genannten Komponenten mittels der elektrischen Steuereinheit 36 insbesondere in Abhängigkeit von dem festgestellten Strom- und Wärmebedarf gesteuert, insbesondere geregelt, werden.

Die KWK-Anlage umfasst ferner ein elektrisches Heizelement 50 zum Erwärmen der Hochtemperatur-Batterie 24. Wie durch einen Richtungspfeil 52 veranschaulicht ist, ist das elektrische Heizelement 50 elektrisch mit der elektrischen Steuereinheit 36 verbunden. Infolge der jeweiligen elektrischen Verbindung der elektrischen Heizeinrichtung 34 und des elektrischen Heizelements 50 mit der elektrischen Steuereinheit 36 sind die elektrische Heizeinrichtung 34 und das elektrische Heizelement 50 elektrisch mit der Kraftmaschine 12 und der Hochtemperatur-Batterie 24 verbunden, sodass die elektrische Heizeinrichtung 34 und das elektrische Heizelement 50 mit elektrischer Energie, welche von der Kraftmaschine 12 und/oder der Hochtemperatur-Batterie 24 bereitgestellt wird, versorgt und dadurch betrieben werden können.

Das elektrische Heizelement 50 dient zum Beheizen der Hochtemperatur-Batterie 24, sodass diese auch dann in ihrem Betriebstemperaturbereich gehalten, das heißt warmgehalten werden kann, wenn das Abgas beispielsweise eine Temperatur aufweist, die geringer als der Betriebstemperaturbereich ist oder wenn die Kraftmaschine 12 deaktiviert ist.

Das elektrische Heizelement 50 ist dabei eine weitere Komponente, welche mittels der elektrischen Steuereinheit 36 insbesondere in Abhängigkeit von der aktuellen Strom- und Wärmenachfrage gesteuert, insbesondere geregelt, wird. Die Stromnachfrage wird insbesondere durch die Kraftmaschine 12 bedient. Mit anderen Worten wird beispielsweise eine Grundlast des elektrischen Stroms durch die Kraftmaschine 12 bedient. Spitzenlasten in der Stromversorgung können durch die Hochtemperatur-Batterie 24 bereitgestellt werden. Beispielsweise ist es vorgesehen, dass zur Bedienung von Spitzenlasten sowohl die Kraftmaschine 12 als auch die Hochtemperatur-Batterie 24 elektrischen Strom bereitstellen, welcher über die elektrische Steuereinheit 36 von der KWK-Anlage insgesamt bereitgestellt und beispielsweise wenigstens einem elektrischen Verbraucher zugeführt wird.

Bei geringer Stromnachfrage wird die Hochtemperatur-Batterie 24 mit elektrischem Strom aufgeladen, der von der Kraftmaschine 12 bereitgestellt wird. Dabei wird beispielsweise ein Teil des von der Kraftmaschine 12 bereitgestellten Stroms zum Aufladen der Hochtemperatur-Batterie 24 und ein weiterer Teil des von der Kraftmaschine 12 bereitgestellten elektrischen Stroms zum Bedienen der geringen Stromnachfrage genutzt.

Liegt die Stromnachfrage unterhalb der Mindestlast der Kraftmaschine 12, so erfolgt die Bedienung der Stromnachfrage, das heißt die elektrische Versorgung, ausschließlich durch die Hochtemperatur-Batterie 24. Dies bedeutet, dass in diesem Zustand die Kraftmaschine 12 keine elektrische Energie bereitstellt. In diesem Betriebsfall ist die Hochtemperatur-Batterie 24 im Betrieb, und es findet durch die interne Wärmeentwicklung keine Auskühlung statt. Eine eventuell notwendige Kühlung kann durch das Gebläse 30 realisiert werden.

Insgesamt ist erkennbar, dass mittels der elektrischen Steuereinheit 36 ein jeweiliger Betrag der mittels der Kraftmaschine 12 und der Hochtemperatur-Batterie 24 bereitgestellten elektrischen Leistung eingestellt wird. Ferner dient die elektrische Steuereinheit 36 zum Umschalten der Hochtemperatur-Batterie 24 zwischen einem ersten Betriebsmodus und einem zweiten Betriebsmodus. Der erste Betriebsmodus ist beispielsweise ein Entlademodus, in welchem die Hochtemperatur-Batterie 24 elektrische Energie bereitstellt, die in der Hochtemperatur-Batterie 24 gespeichert ist. In diesem ersten Betriebsmodus kann dann mittels der elektrischen Steuereinheit 36 der Betrag beziehungsweise die Menge der von der Hochtemperatur-Batterie 24 bereitgestellten elektrischen Energie eingestellt werden.

Der zweite Betriebsmodus der Hochtemperatur-Batterie 24 ist beispielsweise ein Ladezustand, in welchem die Hochtemperatur-Batterie 24 mit elektrischer Energie geladen wird. Diese elektrische Energie, mit welcher die Hochtemperatur-Batterie 24 geladen wird, das heißt welche in der Hochtemperatur-Batterie 24 gespeichert wird, wird beispielsweise von der Kraftmaschine 12 bereitgestellt.

Anhand des Richtungspfeils 42 ist erkennbar, dass die Wärmeversorgung über den Wärmespeicher 22 beziehungsweise aus diesem stattfindet. Die elektrische Steuereinheit 36 sorgt dabei für ein Nachladen des Wärmespeichers 22 durch den Betrieb der Kraftmaschine 12, wobei der Wärmespeicher 22 insbesondere über den zweiten Wärmeübertrager 28 aufgeladen, das heißt beheizt wird. Die elektrische Heizeinrichtung 34 ist optional und ermöglicht beispielsweise eine kurzzeitige hohe Wärmeproduktion zur Spitzenlastdeckung, dadurch, dass elektrischer Strom aus der Kraftmaschine 12 und/oder der Hochtemperatur-Batterie 24 mittels der elektrischen Heizeinrichtung 34 in Wärme umgewandelt werden kann. Weiterhin erlaubt die mittels der elektrischen Heizeinrichtung 34 bewirkbare elektrische Beheizung auch die Aufnahme von elektrischem Strom von außen und die Speicherung in Form von Wärme.

Ferner kann die elektrische Steuereinheit 36 dazu ausgebildet sein, vor dem Start der Kraftmaschine 12 deren Temperatur zu erfassen. Liegt die Temperatur der Kraftmaschine 12 beispielsweise unterhalb eines vorgebbaren Schwellenwerts, so kann die elektrische Steuereinheit 36 die zuvor beschriebene Vorerwärmung der Kraftmaschine 12 bewirken beziehungsweise einleiten.

Die Kraftmaschine 12 weist beispielsweise eine elektrische Leistung in einem Bereich von einschließlich 0,2 bis einschließlich 1.000 Kilowatt und eine thermische Leistung in einem Bereich von einschließlich 0,2 bis einschließlich 3.000 Kilowatt auf. Das Abgas der Kraftmaschine 12 weist, insbesondere stromauf des ersten Wärmeübertragers 26, eine Temperatur in einem Bereich von einschließlich 250 Grad Celsius bis einschließlich 900 Grad Celsius auf. Vorzugsweise weist die Hochtemperatur-Batterie 24 eine Betriebstemperatur in einem Bereich von einschließlich 250 Grad Celsius bis einschließlich 350 Grad Celsius auf. Ferner weist der Wärmespeicher 22 vorzugsweise eine obere Temperatur in einem Bereich von einschließlich 40 Grad Celsius bis einschließlich 160 Grad Celsius auf.

## Patentansprüche

1. Kraft-Wärme-Kopplungsanlage (10) zur dezentralen Strom- und Wärmeversorgung, mit wenigstens einer Kraftmaschine (12), mittels welcher unter Bereitstellen von Abgas elektrische Energie bereitstellbar ist, und mit wenigstens einer Hochtemperatur-Batterie (24), in welcher die von der Kraftmaschine (12) bereitgestellte elektrische Energie speicherbar ist, wobei die Hochtemperatur-Batterie (24) mittels des von der Kraftmaschine (12) bereitgestellten Abgases zum Warmhalten der Hochtemperatur-Batterie (24) versorgbar ist,
**dadurch gekennzeichnet, dass**
wenigstens ein Wärmespeicher (22) zum Speichern von von dem Abgas bereitgestellter Wärmeenergie und wenigstens eine elektrische Heizeinrichtung (34) zum Beheizen des Wärmespeichers (22) vorgesehen sind, wobei die elektrische Heizeinrichtung (34) mit der Hochtemperatur-Batterie (24) elektrisch verbunden und mit in der Hochtemperatur-Batterie (24) gespeicherter elektrischer Energie versorgbar und betreibbar ist.

2. Kraft-Wärme-Kopplungsanlage (10) nach Anspruch 1,
**dadurch gekennzeichnet, dass**
die elektrische Heizeinrichtung (34) in den Wärmespeicher (22) integriert ist.

3. Kraft-Wärme-Kopplungsanlage (10) nach einem der vorhergehenden Ansprüche, **dadurch gekennzeichnet, dass** in Strömungsrichtung des Abgases von der Kraftmaschine (12) zur Hochtemperatur-Batterie (24) zwischen dieser und der Kraftmaschine (12) wenigstens ein Wärmeübertrager (26) angeordnet ist, mittels welchem unter Kühlen des Abgases Wärmeenergie von dem Abgas an den Wärmespeicher (22) übertragbar ist.

4. Kraft-Wärme-Kopplungsanlage (10) nach einem der vorhergehenden Ansprüche, **dadurch gekennzeichnet, dass** in Strömungsrichtung des Abgases stromab der Hochtemperatur-Batterie (24) wenigstens ein weiterer Wärmeübertrager (28) angeordnet ist, mittels welchem die von dem Abgas bereitgestellte Wärmeenergie an den Wärmespeicher (22) übertragbar ist.

5. Kraft-Wärme-Kopplungsanlage (10) nach einem der vorhergehenden Ansprüche, **dadurch gekennzeichnet, dass**
der Hochtemperatur-Batterie (24) wenigstens ein elektrisches Heizelement (50) zum Erwärmen der Hochtemperatur-Batterie (24) zugeordnet ist.

6. Kraft-Wärme-Kopplungsanlage (10) nach Anspruch 5,
**dadurch gekennzeichnet, dass**
das elektrische Heizelement (50) mit der Hochtemperatur-Batterie (24) elektrisch verbunden und mit in der Hochtemperatur-Batterie (24) gespeicherter elektrischer Energie versorgbar und betreibbar ist.

7. Kraft-Wärme-Kopplungsanlage (10) nach einem der vorhergehenden Ansprüche, **dadurch gekennzeichnet, dass**
wenigstens ein Gebläse (30) vorgesehen ist, mittels welchem ein Gasstrom erzeugbar und die Hochtemperatur-Batterie (24) mit dem Gasstrom zum Kühlen der Hochtemperatur-Batterie (24) versorgbar ist.

8. Kraft-Wärme-Kopplungsanlage (10) nach einem der vorhergehenden Ansprüche, **dadurch gekennzeichnet,**
**dass** eine Rezirkulationseinrichtung (33) vorgesehen ist, mittels welcher das Abgas von einer stromab der Hochtemperatur-Batterie (24) angeordneten Abzweigstelle (A) zur Hochtemperatur-Batterie (24) und/oder zu einer stromauf der Hochtemperatur-Batterie (24) angeordneten Einführstelle (E, E2) rückführbar ist.

9. Kraft-Wärme-Kopplungsanlage (10) nach einem der vorhergehenden Ansprüche, **dadurch gekennzeichnet, dass**
eine Steuereinheit (36) eine Strom- (44) und Wärmenachfrage (42) erfasst und die Einzelkomponenten der Kraft-Wärme-Kopplungsanlage (10) so betreibt, dass die Strom- (44) und Wärmenachfrage (42) wenigstens teilweise durch die Kraft-Wärme-Kopplungsanlage (10) bedient werden.

## Claims

1. Combined heat and power plant (10) for the decentralized supply of electricity and heat, having at least one engine (12), by means of which electrical energy can be provided while providing exhaust gas, and having at least one high-temperature battery (24), in which the electrical energy provided by the engine (12) can be stored, wherein the high-temperature battery (24) can be supplied by means of the exhaust gas provided by the engine (12), in order to keep the high-temperature battery (24) warm,
**characterized in that**
at least one thermal store (22), for storing thermal energy provided by the exhaust gas, and at least one electrical heating means (34), for heating the thermal store (22), are provided, wherein the electrical heating means (34) is electrically connected to the high-temperature battery (24), and can be supplied and operated with electrical energy stored in the high-temperature battery (24).

2. Combined heat and power plant (10) according to Claim 1,
**characterized in that**
the electrical heating means (34) is integrated into the thermal store (22).

3. Combined heat and power plant (10) according to either one of the preceding claims,
**characterized in that**
at least one heat exchanger (26), by means of which thermal energy can be transferred from the exhaust gas to the thermal store (22), with cooling of the exhaust gas, is disposed, in the direction of flow of the exhaust gas from the engine (12) to the high-temperature battery (24), between the latter and the engine (12).

4. Combined heat and power plant (10) according to any one of the preceding claims,
**characterized in that**
at least one further heat exchanger (28), by means of which the thermal energy provided by the exhaust gas can be transferred to the thermal store (22), is disposed in the direction of flow of the exhaust gas, downstream from the high-temperature battery (24).

5. Combined heat and power plant (10) according to any one of the preceding claims,
**characterized in that**
at least one electrical heating element (50), for heating the high-temperature battery (24), is assigned to the high-temperature battery (24).

6. Combined heat and power plant (10) according to Claim 5,
**characterized in that**
the electrical heating element (50) is electrically connected to the high-temperature battery (24) and can be supplied and operated with electrical energy stored in the high-temperature battery (24).

7. Combined heat and power plant (10) according to any one of the preceding claims,
**characterized in that**
at least one fan (30) is provided, by means of which a gas stream can be generated, and the high-temperature battery (24) can be supplied with the gas stream to cool the high-temperature battery (24).

8. Combined heat and power plant (10) according to any one of the preceding claims,
**characterized in that**
a recirculation means (33) is provided, by means of which the exhaust gas can be returned, from a branch-off point (A) disposed downstream from the high-temperature battery (24), to the high-temperature battery (24) and/or to an infeed point (E, E2) disposed upstream from the high-temperature battery (24).

9. Combined heat and power plant (10) according to any one of the preceding claims,
**characterized in that**
a control unit (36) senses a demand for electricity (44) and for heat (42), and operates the individual components of the combined heat and power plant (10) such that the demand for electricity (44) and for heat (42) are serviced, at least partly, by the combined heat and power plant (10).

## Revendications

1. Installation (10) de production combinée de chaleur et d'électricité, comprenant au moins un machine (12) électrique au moyen de laquelle de l'énergie électrique peut être mise à disposition avec mise à disposition de gaz d'échappement et comprenant au moins une batterie (24) à haute température, dans laquelle l'énergie électrique mise à disposition par la machine (12) électrique peut être accumulée, la batterie (14) à haute température pouvant, au moyen du gaz d'échappement mis à disposition par la machine (12) électrique, être alimentée pour maintenir chaude la batterie (24) à haute température,
**caractérisé en ce que**
il est prévu au moins un accumulateur (22) de chaleur pour accumuler l'énergie calorifique mise à disposition par le gaz d'échappement et au moins un dispositif (34) électrique de chauffage pour chauffer l'accumulateur (22) de chaleur, le dispositif (34) électrique de chauffage étant relié électriquement à la batterie (24) à haute température et pouvant être alimenté et fonctionner avec de l'énergie électrique accumulée dans la batterie (24) à haute température.

2. Installation (10) de production combinée de chaleur et d'électricité suivant la revendication 1, **caractérisée en ce que** le dispositif (34) électrique de chauffage est intégré dans l'accumulateur (22) de chaleur.

3. Installation (10) de production combinée de chaleur et d'électricité suivant l'une des revendications précédentes, **caractérisée en ce qu'**il est monté, dans le sens d'écoulement du gaz d'échappement de la machine (12) électrique à la batterie (24) à haute température, entre celle-ci et la machine (12) électrique, au moins un échangeur de chaleur (26), au moyen duquel de l'énergie calorifique peut, avec refroidissement du gaz d'échappement, être transmise du gaz d'échappement à l'accumulateur (22) de chaleur.

4. Installation (10) de production combinée de chaleur et d'électricité suivant l'une des revendications précédentes, **caractérisée en ce qu'**il est monté, dans le sens d'écoulement du gaz d'échappement, en aval de la batterie (24) à haute température, au moins un autre échangeur de chaleur (28), au moyen duquel l'énergie calorifique, mise à disposition par le gaz d'échappement, peut être transmise à l'accumulateur (22) de chaleur.

5. Installation (10) de production combinée de chaleur et d'électricité suivant l'une des revendications précédentes, **caractérisée en ce qu'**au moins un élément (50) électrique de chauffage est, pour échauffer la batterie (24) à haute température, associé à la batterie (24) à haute température.

6. Installation (10) de production combinée de chaleur et d'électricité suivant la revendication 5, **caractérisée en ce que** l'élément (50) électrique de chauffage est relié électriquement à la batterie (24) à haute température et peut être alimenté et peut fonctionner avec de l'énergie électrique accumulée dans la batterie (24) à haute température.

7. Installation (10) de production combinée de chaleur et d'électricité suivant l'une des revendications précédentes, **caractérisée en ce qu'**il est prévu au moins une soufflante (30), au moyen de laquelle un courant gazeux peut être produit et la batterie (24) à haute température peut, pour refroidir la batterie (24) à haute température, être alimentée en le courant gazeux.

8. Installation (10) de production combinée de chaleur et d'électricité suivant l'une des revendications précédentes, **caractérisée en ce qu'**il est prévu un dispositif (33) de recirculation, au moyen duquel le gaz d'échappement peut être retourné d'un point (A) de bifurcation disposé en aval de la batterie (24) à haute température à la batterie (24) à haute température et/ou à un point (E, E2) d'introduction disposé en amont de la batterie (24) à haute température.

9. Installation (10) de production combinée de chaleur et d'électricité suivant l'une des revendications précédentes, **caractérisée en ce qu'**une unité (36) de commande détecte une demande de courant (44) et de chaleur (42) et fait fonctionner les divers éléments de l'installation (10) de production combinée de chaleur et d'électricité, de manière à ce que la demande de courant (44) et de chaleur (42) soit assurée, au moins en partie, par l'installation (10) de production combinée de chaleur et d'électricité.
